**Europäisches Patentamt**

**European Patent Office**

**Office européen des brevets**

(19)

(11) Veröffentlichungsnummer: **0 177 852**
A2

# (12) EUROPÄISCHE PATENTANMELDUNG

(21) Anmeldenummer: 85112248.1

(22) Anmeldetag: 27.09.85

(51) Int. Cl.⁴: **G 03 H 1/24**, G 03 H 1/20

(30) Priorität: 11.10.84 DE 3437355

(43) Veröffentlichungstag der Anmeldung: 16.04.86
Patentblatt 86/16

(84) Benannte Vertragsstaaten: **AT BE CH DE FR GB IT LI LU NL SE**

(71) Anmelder: **Holtronic GmbH, Dall' Armi-Strasse 5, D-8058 Erding (DE)**

(72) Erfinder: **Dausmann, Günter J., Dipl.-Ing., Schlachthausstrasse 9, D-8058 Erding (DE)**
Erfinder: **de Jongh, Rudi T., Naabstrasse 23, D-8200 Rosenheim (DE)**
Erfinder: **Gnädig, Klaus A., Dr. Dipl.-Phys., Dreimühlenstrasse 7, D-8000 München 5 (DE)**

(74) Vertreter: **Lorenz, Eduard et al, Rechtsanwälte Eduard Lorenz - Bernhard Seidler Margrit Seidler - Dipl.-Ing. Hans-K. Gossel Dr. Ina Philipps - Dr. Paul B. Schäuble Dr. Siegfried Jackermeier, Widenmayerstrasse 23 D-8000 München 22 (DE)**

(54) Verfahren zur Herstellung eines mit Weisslicht rekonstruierbaren prägefähigen Schwarz-Weiss-Hologramms.

(57) Die Erfindung betrifft ein Verfahren zur Herstellung eines mit Weißlicht rekonstruierbaren prägefähigen Schwarz-Weiß-Hologramms, das mit monochromatischem kohärentem Licht mit Objektstrahl und Referenzstrahl auf einem optischen Aufzeichnungsträger zur Einschaltung eines optischen Abbildungselements in den Objektstrahl zwischen Objekt und Aufzeichnungsmaterial aufgenommen wird. Um ein derartiges achromatisches Hologramm von hoher Qualität zu schaffen, das in allen Achsen autostereoskopisch reproduzierbar ist und sich auch zur mechanischen Vervielfältigung durch Stempel eignet, wird ein optisches Abbildungselement mit großem Öffnungsverhältnis vorgesehen. Nach der Aufnahme eines ersten Hologramms wird aus dessen Aufzeichnungsträger mit einem Referenzstrahl, der entgegengesetzt zur Aufnahmerichtung bei der Aufnahme dieses ersten Hologramms läuft, die Objektwelle aus diesem Hologramm rekonstruiert. Die Objektwelle wird rückwärts durch das optische Element der ursprünglichen Objektposition abgebildet, in der sie mit einem Referenzstrahl zur Interferenz gebracht wird. Auf einem zweiten Aufzeichnungsträger wird sodann ein unverzerrtes Bild des Objekts in einem zweiten Hologramm aufgezeichnet. Aus dem Interferenzmuster des zweiten Hologramms läßt sich ein Stempelrelief erzeugen.

0177852
17.09.1985
83 017 G-die

Holtronic GmbH,
8058 Erding

## Verfahren zur Herstellung eines mit Weißlicht rekonstruierbaren prägefähigen Schwarz-Weiß-Hologramms

Die Erfindung betrifft ein Verfahren zur Herstellung eines mit Weißlicht rekonstruierbaren prägefähigen Schwarz-Weiß-Hologramms (achromatischen Hologramms), das mit monochromatischem kohärentem Licht mit Objektstrahl und Referenzstrahl auf einem optischen Aufzeichnungsträger unter Einschaltung eines optischen Abbildungselements in den Objektstrahl zwischen Objekt und Aufzeichnungsmaterial aufgenommen wird.

Ein derartiges Verfahren ist beispielsweise aus den US-PS 36 33 989 und 39 44 322 bekannt.

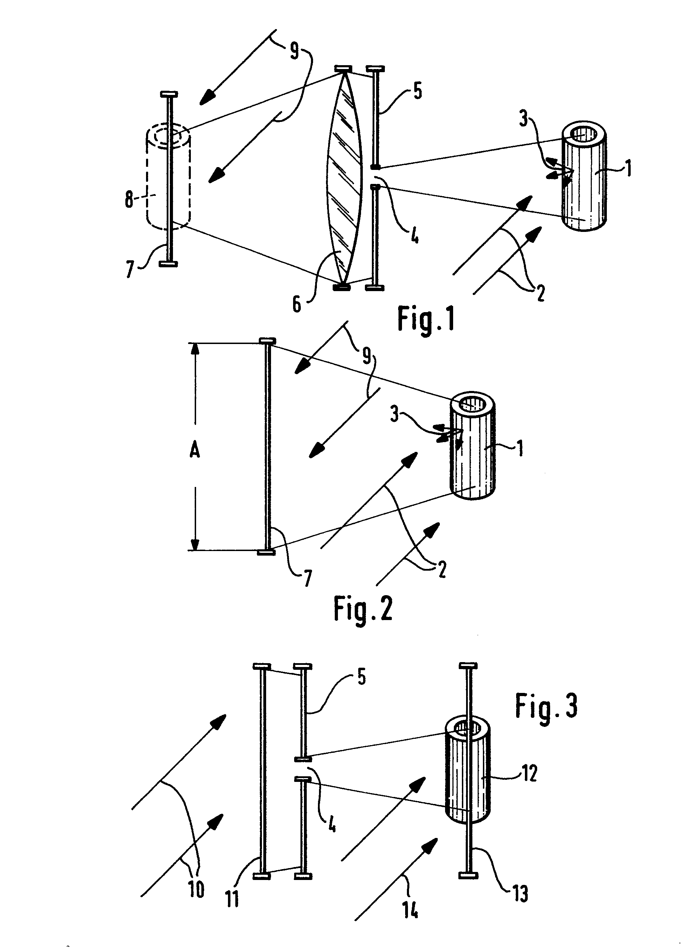

Bei dem aus der US-PS 36 33 989 bekannten Verfahren geht es jedoch darum, ein Hologramm mit nur horizontaler Achse, also einem in horizontaler Richtung reproduzierbaren stereoskopischen Bild, zu schaffen, das insgesamt eine geringere Informationsdichte durch das Ausfiltern der vertikalen Achse enthält, so daß es beispielsweise auch zur elektronischen Übertragung geeignet ist (dieser Stand der Technik wird nachstehend anhand der Fig. 1 bis 3 noch näher erläutert).

Die US-PS 39 44 322 enthält Maßnahmen zu einer verbesserten Wiedergabe des Hologramms, das ebenfalls nur in einer Richtung autostereoskopisch rekonstruierbar ist, und zwar achromatisch.

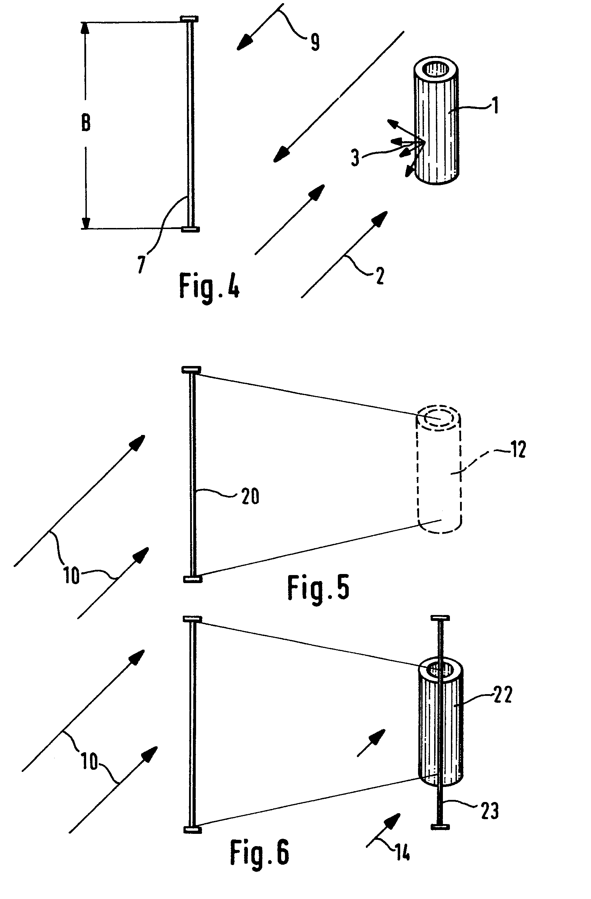

Aus der Veröffentlichung "Holography Handbook", Ross Books, P.O. Box 4340, Berkeley, Ca., 94704, ist das sog. open aperture-Verfahren bekannt, das unten anhand der Fig. 4 bis 6 erläutert wird.

Gegenüber diesen bekannten Verfahren ist es Aufgabe der Erfindung, ein achromatisches Hologramm mit einfachen Mitteln und besserer Qualität zu schaffen, das in allen Achsen autostereoskopisch reproduzierbar ist und sich zur mechanischen Vervielfältigung durch Stempel eignet.

Erfindungsgemäß wird diese Aufgabe dadurch gelöst, daß das Abbildungselement ein großes Öffnungsverhältnis aufweist und daß nach der Aufnahme des ersten Hologramms aus dem betreffenden, auf dem Aufzeichnungsträger aufgenommenen ersten Hologramm mit einem Referenzstrahl, der entgegengesetzt zur Aufnahmerichtung bei der Aufnahme dieses ersten Hologramms läuft, die Objektwelle aus dem ersten Hologramm rekonstruiert wird, daß die Objektwelle rückwärts durch das optische Element in der ursprünglichen Objektposition abgebildet wird, in der sie mit einem Referenzstrahl zur Interferenz gebracht wird, und daß dadurch auf einem zweiten Aufzeichnungsträger ein unverzerrtes Bild des Objekts in einem zweiten Hologramm aufgezeichnet wird.

Das nach dem erfindungsgemäßen Verfahren zur Anwendung kommende erste Hologramm, das das sogenannte Master-Hologramm darstellt, kann sehr viel kleiner sein als das Hologramm, das nach dem open aperture-Verfahren zur Anwendung kommt. Das erfindungsgemäße Verfahren bietet damit die Möglichkeit, einen kleineren Parallelstrahl als Referenzstrahl zu verwenden. Dies bedeutet, daß billigere Optiken, die dennoch eine höhere Qualität als die bei dem bekannten Verfahren zur Anwendung kommenden aufweisen können, eingesetzt werden können. Die erfindungsgemäß zur Anwendung kommenden Kolimatoroptiken können wegen ihrer kleineren Abmessungen in besserer Qualität hergestellt werden und erzeugen darum zwangsläufig auch geringere Abbildungsfehler.

Unter einem großen Öffnungsverhältnis des optischen Abbildungselements, z.B. einer Sammellinse, ist das Verhältnis zwischen einer großen Aperturblende zu kurzer Brennweite zu verstehen.

Optische Elemente mit großem Öffnungsverhältnis erzeugen erhebliche Abbildungsfehler (Abbildungsfehler z.B. sphärischer Natur, Astigmatismen usw.). Um diese Fehler wieder auszusieben, ist erfindungsgemäß vorgesehen, daß mit dem optischen Element zur Aufnahme des ersten Hologramms das zweite Hologramm aufgenommen wird, so daß sämtliche Abbildungsfehler dadurch kompensiert werden, daß bei der Aufnahme des zweiten Hologramms das optische Element mit großem Öffnungsverhältnis rückwärts durchlaufen wird. Durch diese Maßnahme werden die auf dem ersten Hologramm erscheinenden Fehler mit umgekehrten Vorzeichen kompensiert, so daß aus dem zweiten Hologramm das Objekt unverzerrt rekonstruierbar ist.

Das Öffnungsverhältnis ist so groß zu wählen, daß bei der Rekonstruktion des ersten und/oder zweiten Hologramms eine achromatische Kernzone größer ist als die regenbogenfarbig aufgefächerten Randzonen des oder der Hologramme.

0177852

In weiterer Ausgestaltung der Erfindung kann der farbig aufgefächerte Randbereich dadurch verringert werden, daß zur Dispersionskompensation ein zusätzliches Beugungsgitter oder Farbfilter eingebaut wird. Verlaufende Farbfilter haben außerdem den
Effekt, daß das Kopieren von Hologrammen nahezu unmöglich wird
und diese Hologramme für Sicherheitszwecke damit geeignet sind.

In weiterer Ausgestaltung der Erfindung ist vorgesehen, daß das
zweite Hologramm ein Transmissionshologramm ist, das bei der
Rekonstruktion mit einem Spiegel hinterlegt wird. Das Hologramm
kann also als Reflexionshologramm von dem Betrachter gesehen
werden.

Der besondere Vorteil liegt darin, daß sich nach bekannten Verfahren von dem Interferenzmuster des zweiten Hologramms ein
Stempelrelief erzeugen läßt, so daß auf mechanischem Wege die
Hologramme beliebig oft vervielfältigt werden können. Mit dem
Stempel wird entweder eine spiegelnde Fläche geprägt oder ein
optisches transparentes Material, das eine spezifische spektrale
Transmission aufweisen kann und das vor einer spiegelnden Fläche
aufgebracht werden kann.

Ein Ausführungsbeispiel der Erfindung wird nachstehend anhand
der Zeichnungen näher erläutert. In dieser zeigt

Fig. 1   eine Skizze zur Erläuterung des bekannten
         einstufigen Verfahrens zur Aufnahme eines
         Regenbogenhologramms,

Fig. 2 und 3
         Skizzen zur Erläuterung eines bekannten
         zweistufigen Verfahrens zur Aufnahme eines
         Regenbogenhologramms,

0177852

Fig. 4 bis 6 Skizzen zur Erläuterung des bekannten
    open aperture-Hologramms,

Fig. 7 bis 9 Skizzen zur Erläuterung des erfindungsgemäßen Verfahrens mit kleinem Master-
    Hologramm und einem Abbildungselement mit
    großem Öffnungsverhältnis,

Fig. 10 eine Skizze zur Erläuterung der Wirkungsweise bekannter Regenbogenhologramme bei
    der Rekonstruktion,

Fig. 11 eine Skizze zur Erläuterung der Wirkungsweise der Rekonstruktion eines achromatischen
    Hologramms mit Weißlicht nach der Erfindung
    und

Fig. 12 einen Schnitt in vergrößerter Darstellung
    durch ein nach dem erfindungsgemäßen
    Verfahrens hergestelltes Prägehologramm.

Anhand der Fig. 1 bis 3 werden nun einstufige und zweistufige
Aufnahmeverfahren für Regenbogenhologramme erläutert, wie sie
beispielsweise aus der US-PS 36 33 989 bekannt sind.

Fig. 1 stellt den grundsätzlichen Aufbau bei der Aufnahme eines
Hologramms mit einer Schlitzblende dar. Das Objekt 1 wird mit
den Objektstrahlen 2 angestrahlt, die von einem nicht dargestellten Laser kommen.

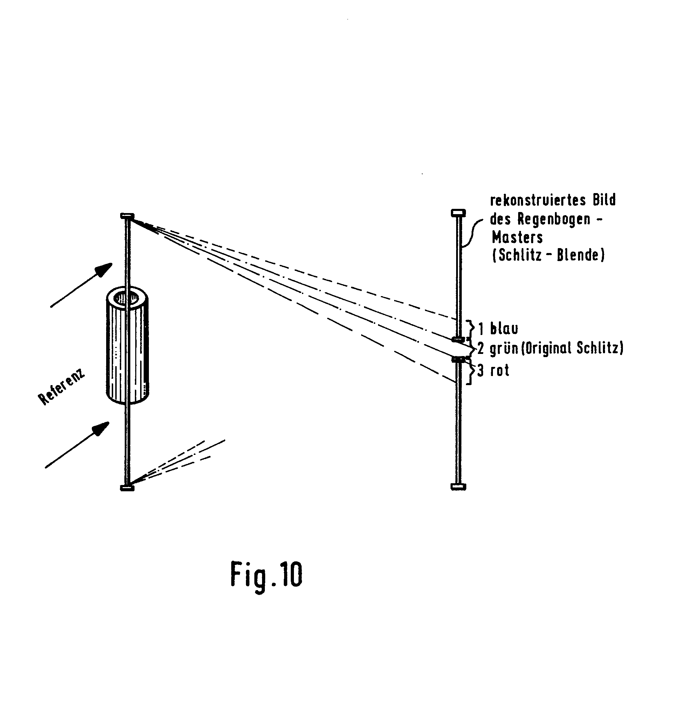

Bereits hier sei erwähnt, daß sämtliche anhand der Fig. 1 bis 9 dargestellten Aufnahmeverfahren voraussetzen, daß das Objekt mit Laserlicht angestrahlt wird, von dem in bekannter Weise der Referenzstrahl über Spiegel oder dergleichen abgespalten wird.

Das von dem Objektstrahl 2 angestrahlte Objekt 1 emittiert die Strahlen 3 mit der optischen Information des Objektes. Diese Strahlen mit der Information des Objektes 1 fallen durch den Schlitz der Schlitzblende 5 und werden durch eine Abbildungsoptik, beispielsweise die Sammellinse 6, in der Hologrammebene 7 in der gestrichelt dargestellten Weise 8 abgebildet. Die Abbildung mit der Information des Objektes 1 wird in der Hologrammebene 7 mit dem Referenzstrahl 9 zur Interferenz gebracht. Das sich daraus ergebende Interferenzmuster wird in bekannter Weise in der Hologrammebene 7 auf fotografischem Aufzeichnungsmaterial aufgezeichnet.

Nach dem anhand von Fig. 1 beschriebenen Verfahren ist somit ein übliches Regenbogenhologramm in einem einstufigen Verfahren hergestellt worden. Dieses Regenbogenhologramm ist ein sogenanntes Transmissionshologramm. Es läßt sich z.B. durch Kopieren mit blauem Laserlicht auf Photoresist in ein Oberflächenhologramm umsetzen, bei dem die die Hologramminformation tragenden Interferenzstrukturen in Form eines prägefähigen Oberflächenreliefs gespeichert sind. Ein solches Hologramm kann verspiegelt und dadurch in Reflexion sichtbar gemacht werden. Die Art dieses bekannten Umsetzungsverfahrens ist im Stand der Technik bekannt und wird daher nicht näher erläutert.

Anhand der Fig. 2 und 3 wird nun ein zweistufiges Verfahren zur Aufnahme eines Regenbogenhologramms erläutert:

In der ersten Stufe gemäß Fig. 2 wird in der Hologrammebene 7 mit den von dem Objekt 1 reflektierten Objektstrahlen 3 und dem Referenzstrahl 9 ein Transmissionshologramm auf fotografischem Aufzeichnungsmaterial aufgezeichnet. Dieses Hologramm bildet ein noch nicht prägefähiges Masterhologramm.

Dieses Masterhologramm 11 dient in der aus Fig. 3 ersichtlichen Weise der Rekonstruktion eines Hologrammbildes 12 in der zweiten Hologrammebene 13 mit Hilfe des Rekonstruktionsstrahles 10, und zwar erfolgt die Rekonstruktion durch den Spalt 4 einer Spaltblende 5. Das in dieser Weise rekonstruierte Hologrammbild 12 wird mit dem Referenzstrahl 14 zur Interferenz gebracht, so daß auf einem in der Hologrammebene 13 vorgesehenen fotografischen Aufzeichnungsmaterial ein zweites Hologramm aufgenommen wird.

Dieses in dem beschriebenen zweistufigen Verfahren aufgenommene Hologramm ist dem in der Hologrammebene 7 nach Fig. 1 aufgenommenen Hologramm äquivalent.

Der Unterschied zwischen den Verfahren nach Fig. 1 einerseits und den Fig. 2 und 3 andererseits besteht im wesentlichen darin, daß bei dem zweistufigen Verfahren keine Abbildungsoptik verwendet wird.

Die bekannte Verwendung der Spaltblende 5 mit dem Spalt 4 hat den Sinn, das mit Weißlicht rekonstruierte Bild je nach dem Blickwinkel nur in einer Regenbogenfarbe erscheinen zu lassen, so daß sich ein sichtbares scharfes Bild ergibt. Würde bei der Aufnahme mit Laserlicht auf die Spaltblende verzichtet, würde ein Hologramm hergestellt werden, das bei seiner Rekonstruktion mit Weißlicht das aufgenommene Bild in allen Regenbogenfarben auseinandergezogen wiedergibt, so daß wegen der Überlagerung dieser Bilder kein scharfes Bild entsteht. Die Spaltblende, die Teil des aufgenommenen Hologramms ist, schneidet alle außerhalb des Spaltes entstehenden Bilder der oberhalb und unterhalb liegenden Farben heraus, so daß je nach Blickwinkel im wesentlichen nur ein einfarbiges und damit hinreichend scharfes Bild entsteht. Die Verwendung der Spaltblende gestattet es daher, mit
Weißlicht rekonstruierbare Regenbogenhologramme herzustellen.

Die mit der Spaltblende aufgenommenen Regenbogenhologramme haben
einmal den Nachteil, daß sie je nach Blickwinkel in unterschiedlichen Farben erscheinen. Zum anderen ist in vertikaler Richtung
der Raumwinkel eingeschränkt, so daß ein autostereoskopischer
Effekt im wesentlichen nur in der horizontalen Ebene entsteht.

Nach dem anhand der Fig. 4 bis 6 erläuterten Verfahren läßt sich
ein sowohl in der horizontalen als auch in der vertikalen Ebene
räumlich Schwarz-Weiß-Hologramm herstellen.

Hierzu wird in der üblichen Weise mit dem reflektierten Objektstrahl 3 und dem aus einer ebenen Welle bestehenden Referenzstrahl 9 in der aus Fig. 4 ersichtlichen Weise in der Hologrammebene 7 ein Hologramm 20 aufgenommen. Dieses Hologramm unterscheidet sich von dem gemäß Fig. 3 aufgenommenen Hologramm 11
dadurch, daß dieses flächenmäßig wesentlich ausgedehnter ist.

Anschließend wird mit diesem Masterhologramm 20 mit Hilfe des
dem Referenzstrahl 9 entgegengesetzt gerichteten Rekonstruktionsstrahl 10 das Hologrammbild 22 rekonstruiert, und zwar in der
aus Fig. 6 ersichtlichen Weise in der zweiten Hologrammebene 23.
In dieser Hologrammebene wird sodann zur Aufzeichnung des zweiten Hologramms fotografisches Aufzeichnungsmaterial eingebracht,
so daß mit Hilfe des Referenzstrahls 14 das zweite Hologramm aufgenommen werden kann.

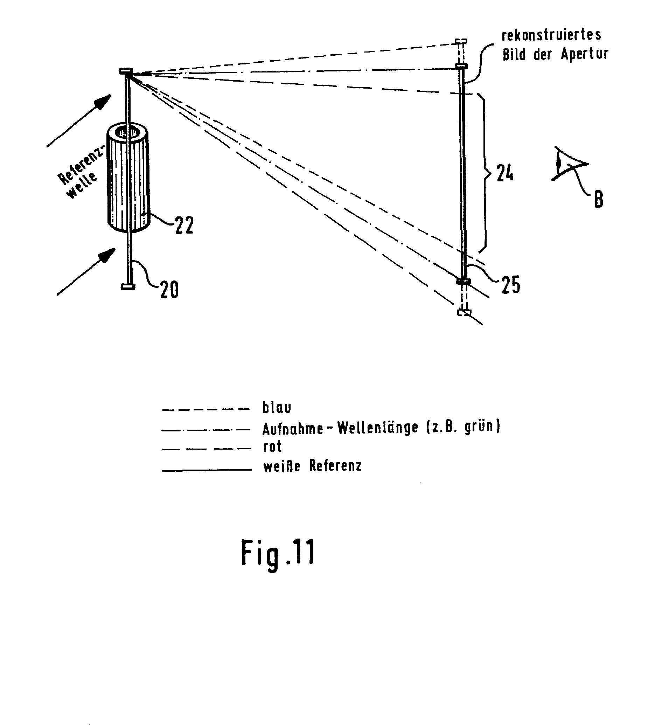

Dieses Hologramm läßt sich nun in der aus Fig. 11 ersichtlichen
Weise mit Weißlicht als Schwarzweiß-Hologramm in allen Richtungen räumlich rekonstruieren. Und zwar ist dies deshalb möglich,
weil wegen der Größe des Masterhologramms die regenbogenfarbenartig aufgefächerten, einander überlagerten Bilder nur in den
Randbereichen des Bildes entstehen, so daß die Kernzone, die
wegen der Größe des Masterhologramms ausreichend groß ist, ein
sichtbares räumliches Schwarzweiß-Hologramm entsteht. Wie aus
Fig. 11 ersichtlich ist, rekontruiert jeder Punkt des zweiten
Hologramms 20 die gespeicherte Hologramminformation in allen
Regenbogenfarben. Da jedoch das Hologramm 20 eine große flächenhafte Ausdehnung hat, kommen in der Kernzone 24 alle Regenbogenfarben der leuchtenden Bildpunkte in der Weise zur Deckung, daß
sich ein weißes Bild in der Ebene der rekonstruierten Apertur
ergeben würde. Wir nun durch diese rekonstruierte Aperturebene
25 das Hologrammbild 22, das in der Hologrammebene rekonstruiert
wird, betrachtet, ergibt sich für den Betrachter B ein Schwarz-
Weiß-Eindruck des rekonstruierten Hologramms.

Das zuletzt beschriebene bekannte Verfahren ist jedoch sehr
schwierig und aufwendig, weil die Aufnahme flächenhaft großer
Hologramme wegen der Ausleuchtung mit parallelem, von einem
Laser kommendem Licht problematisch ist. Zur ausreichenden
Ausleuchtung wird nämlich eine relativ große Beleuchtungsstärke
benötigt, um hinreichend kurze Belichtungszeiten erreichen zu
können. Weiterhin wird wegen der Großflächigkeit die Beherrschbarkeit der ebenen Wellenfronten sehr aufwendig.

Der erfindungsgemäße Vorschlag schafft hier Abhilfe:

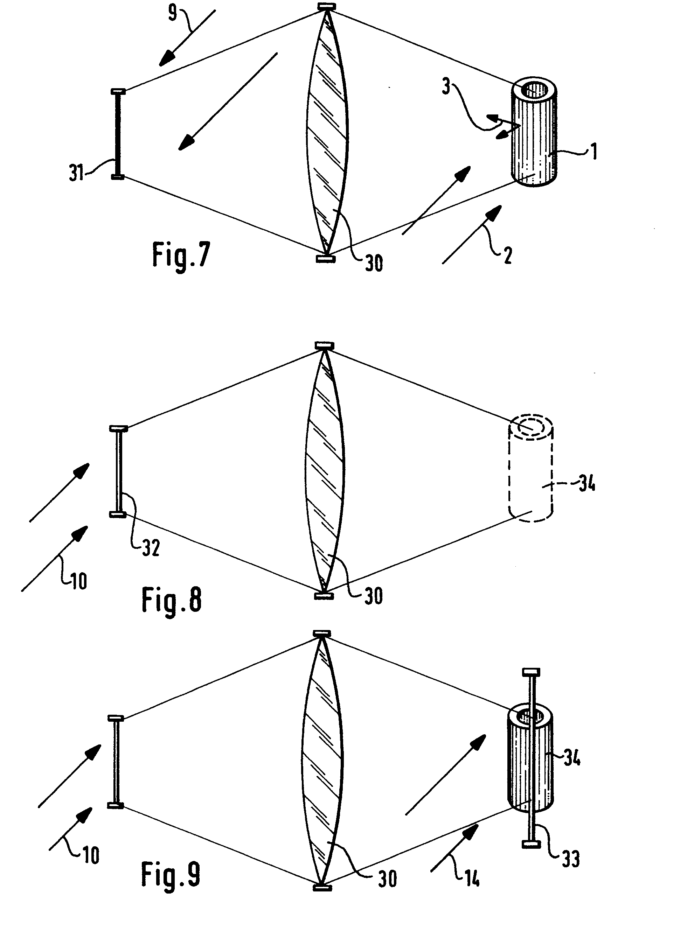

Gemäß Fig. 7 wird der reflektierte Objektstrahl 3 durch die
Abbildungsoptik 30 in der Hologrammebene 31 in der dargestellten
Weise gesammelt, so daß in dieser Hologrammebene 31 mit einem
fotografischen Aufzeichnungsmaterial und dem Referenzstrahl 9
ein Masterhologramm 32 aufgenommen werden kann. Anschließend
wird in der aus Fig. 8 ersichtlichen Weise aus dem Masterhologramm 32 mit dem Rekonstruktionslichtstrahl 10 unter Verwendung
der Abbildungsoptik 30 in der zweiten Hologrammebene 33 aus dem Masterhologramm das Objektbild 34 rekonstruiert. Dieses rekonstruierte Objektbild wird sodann in der zweiten Hologrammebene
33 mit dem Referenzstrahl 14 das zweite Hologramm aufgenommen.

Durch die rückläufige Aufnahme des zweiten Hologramms durch die
Abbildungsoptik 30 werden die von dieser auf dem Masterhologramm
32 erzeugten Abbildungsfehler in dem zweiten rekonstruierten
Hologramm kompensiert, so daß dieses ein verzerrungsfreies Bild
des ursprünglichen Objekts darstellt.

Zusätzlich weist das zweite Hologramm auch deshalb weniger
Abbildungsfehler auf, weil das Masterhologramm kleiner ist und
deshalb mit einem kleineren Parallelstrahl aufgenommen werden
konnte.

Das nach dem erfindungsgemäßen Verfahren hergestellte Hologramm
ist ein Schwarzweiß-Hologramm, wie nachstehend anhand der Fig.
11 erläutert wird:

Während bei dem open aperture-Verfahren das Schwarzweißhologramm
durch das großflächige Masterhologramm erzeugt wurde, wird nach
dem erfindungsgemäßen Verfahren die benötigte große Apertur nur
durch die Abbildungsoptik erzeugt, ohne daß auch entsprechend
großflächige Masterhologramme erzeugt werden müßten. Damit kann
die Hologrammtechnik auf die bekannten Verfahren beschränkt werden, wobei nur über den Trick der rückläufigen Abbildungsoptik
zur Erzeugung einer Schwarzweiß-Kernzone eine große Apertur erzeugt wird. Als Abbildungsoptik können billige Linsen verwendet
werden, weil sich deren Fehler durch die Rückläufigkeit kompensieren.

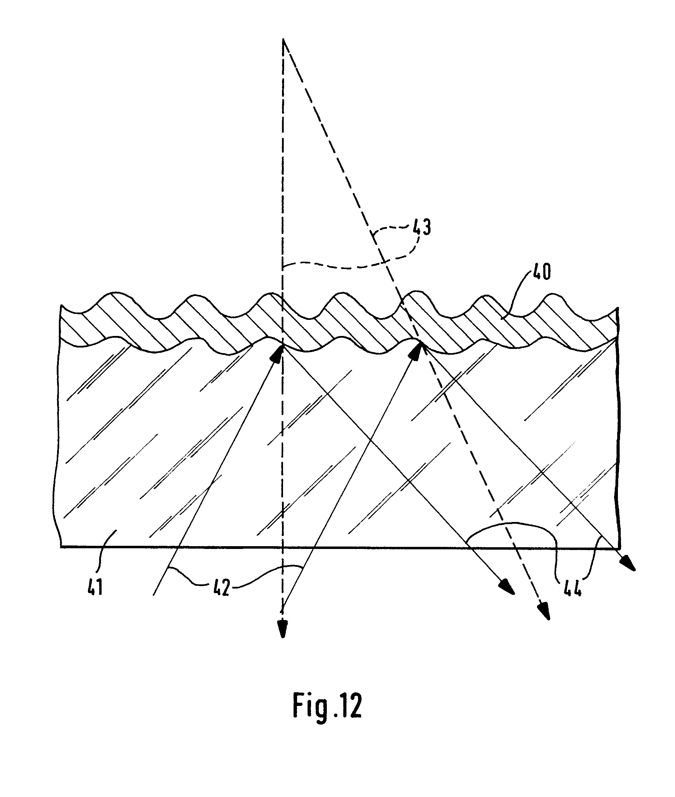

Das nach dem erfindungsgemäßen Verfahren gemäß den Fig. 7 bis 9
hergestellte Hologramm 33 ist zunächst ein Transmissionshologramm. Dieses Transmissionshologramm wird nach bekannten Verfahren in ein prägefähiges Oberflächenhologramm umgesetzt,
das sodann prägefähig ist. Ein mit einem Prägestempel erstelltes
Prägehologramm, dessen Vorlage nach dem erfindungsgemäßen
Verfahren hergestellt worden ist, ist aus Fig. 12 ersichtlich.
Dieses Prägehologramm besteht aus einer spiegelnden Schicht 40,
die auf einem optisch transparenten Träger 41 aufgebracht ist.
Durch die transparente Schicht 41 trifft der Rekonstruktionsstrahl 42 auf die spiegelnde, durch das geprägte Relief phasenmodulierte Schicht. Dort wird ein Teil des Lichts in der nullten
Ordnung 44 reflektiert und ein anderer Teil 43 durch vom Relief
hervorgerufene Phasenverschiebungen in Richtung der Strahlen 43
gebeugt. Die Strahlen 43 zeigen dann die Rekonstruktion des aufgenommenen Objektes. Die optisch transparente Schicht kann z.B.
aus PVC oder Polyester bestehen.

Das transparente Material kann zusätzlich in der gewünschten
Weise eingefärbt werden. Die Einfärbung kann zur Einschränkung
der Bandbreite benutzt werden. Dadurch ergeben sich schärfere
Bilder.

Das transparente Material kann auch ohne Spiegelschicht geprägt
und dann als reines Transmissions-Hologramm verwendet werden.

Aufgrund der Färbung wird ein zusätzlicher Sicherheitsfaktor
geschaffen, wenn das geprägte Hologramm ein Echtheitskennzeichen
sein soll. Ein Kopieren durch nicht befugte Personen ist dadurch
mit größter Wahrscheinlichkeit ausgeschlossen.

Das Kopieren von Hologrammen in der Form mikroskopischer Oberflächenstrukturen kann entweder durch direktes Abformen oder
optisch erfolgen.

Die mechanische Kopierbarkeit des Reliefs ist durch Einbetten
oder Eingießen der Strukturen zu verhindern, da diese dadurch unzugänglich werden. Wird versucht, ein Relief mit Laserlicht
zu kopieren, so ist dies durch gezielte Einfärbung der über dem
Relief liegenden transparenten Schicht nur mit einem wellenlängenveränderlichen Farbstofflaser möglich. Durch Farbverläufe in
der transparenten Schicht kann auch mit einem Farbstofflaser
keine komplette Kopie mehr gezogen werden.

Holtronic GmbH,
8058 Erding

---

### Verfahren zur Herstellung eines mit Weißlicht rekonstruierbaren prägefähigen Schwarz-Weiß-Hologramms

---

## Patentansprüche:

1.   Verfahren zur Herstellung eines mit Weißlicht rekonstruierbaren prägefähigen Schwarz-Weiß-Hologramms (achromatischen Hologramms), das mit monochromatischem kohärentem Licht mit Objektstrahl und Referenzstrahl auf einem optischen Aufzeichnungträger unter Einschaltung eines optischen Abbildungselements in den Objektstrahl zwischen Objekt und Aufzeichnungsmaterial aufgenommen wird,

**dadurch gekennzeichnet,**

daß das optische Abbildungselement ein großes Öffnungsverhältnis aufweist und daß nach der Aufnahme des ersten Hologramms aus dem betreffenden, auf dem Aufzeichnungsträger aufgenommenen ersten Hologramm mit einem Referenzstrahl, der entgegengesetzt zur Aufnahmerichtung bei der
Aufnahme dieses ersten Hologramms läuft, die Objektwelle
aus dem ersten Hologramm rekonstruiert wird, daß die
Objektwelle rückwärts durch das optische Element in der
ursprünglichen Objektposition abgebildet wird, in der sie
mit einem Referenzstrahl zur Interferenz gebracht wird,
und daß dadurch auf einem zweiten Aufzeichnungsträger ein
unverzerrtes Bild des Objektes in einem zweiten Hologramm
aufgezeichnet wird.

2. Verfahren nach Anspruch 1, dadurch gekennzeichnet, daß das
Öffnungsverhältnis so groß ist, daß bei der Rekonstruktion
des ersten und/oder zweiten Hologramms die Schwarz-Weiß-
Kernzone gleich oder größer ist als die regenbogenfarbig
aufgefächerten Randzonen des oder der Hologramme.

3. Verfahren nach Anspruch 1 oder 2, dadurch gekennzeichnet,
daß das zweite Hologramm ein Transmissionshologramm ist,
das bei der Rekonstruktion mit einem Spiegel hinterlegt
wird.

4. Verfahren nach einem der vorhergehenden Ansprüche, dadurch
gekennzeichnet, daß aus dem Interferenzmuster des zweiten
Hologramms ein Stempelrelief erzeugt wird.

5. Verfahren nach Anspruch 4, dadurch gekennzeichnet, daß das
Stempelrelief in eine spiegelnde Fläche geprägt wird.

6.  Verfahren nach Anspruch 4, dadurch gekennzeichnet, daß das Relief in ein transparentes Medium geprägt wird, das eine spezifische spektrale Transmission aufweist (mit Farbstoffen dotierte transparente Kunststoffe).

7.  Verfahren nach Anspruch 6, dadurch gekennzeichnet, daß das transparente Medium durch Polarisationseffekte oder Gitter Farbwirkungen erzeugt.

8.  Verfahren nach Anspruch 4 - 7, dadurch gekennzeichnet, daß die geprägte Fläche von einem transparenten Medium zumindest einseitig geschützt wird und daß diesem Medium bestimmte Farbfilterwirkungen zugewiesen werden.

9.  Verfahren nach einem der Ansprüche 6 bis 8, dadurch gekennzeichnet, daß das transparente Medium verlaufende Farbeigenschaften besitzt.

Fig.1

Fig.2

Fig.3

**Fig.4**

**Fig.5**

**Fig.6**

Fig.7

Fig.8

Fig.9

rekonstruiertes Bild
des Regenbogen -
Masters
(Schlitz - Blende)

1 blau
2 grün (Original Schlitz)
3 rot

Referenz

Fig.10

Fig.11

43

40

41

42

44

**Fig.12**